# EUROPEAN PATENT SPECIFICATION

(11) **EP 1 403 544 B1**
(45) Date of publication and mention of the grant of the patent: **22.12.2010**
(21) Application number: 03020345.9
(22) Date of filing: 09.09.2003
(51) Int. Cl.: F16D 13/68

(54) **Multiple-disc clutch**
Lamellenkupplung
Embrayage à lamelles multiples

(30) Priority: 27.09.2002 JP 2002283509
(43) Date of publication of application: 31.03.2004
(73) Proprietor: HONDA GIKEN KOGYO KABUSHIKI KAISHA, Minato-ku, Tokyo (JP)
(72) Inventor: Terada, Koji, c/oK.K. Honda Gijutsu Kenkyusho, Wako-shi, Saitama (JP); Nagahashi Yoshiki, c/oK.K. Honda Gijutsu Kenkyusho, Wako-shi, Saitama (JP)
(74) Representative: Rupp, Christian

(56) References cited:
- DE-A- 10 005 447
- DE-A- 19 536 424

## Description

The present invention relates to a multiple-disc clutch for interrupting transmission of power from an input shaft to a driven shaft.

### Related Art

With related multiple-disc clutches, a clutch outer is divided into a base unit and an outer unit. These are resiliently coupled via resilient members composed of rubber etc. so that when a clutch outer is subjected to impact force, this impact can be absorbed. Further, the clutch inner is also divided into two members of an inner and outer member. The inner member and the outer member are resiliently coupled as a result of resilient members constituted by rubber material etc. being sandwiched between projections projecting in mutually different manners from the facing surfaces of each of the inner and outer members so that when the clutch inner is subjected to shocks, such shocks can be absorbed (for example, refer to patent document 1).

### [Patent Document 1]

Published examined Japanese patent publication JP-B-2000570 (JP-A-58000634) (column 3, FIG. 1), discloses a clutch according to the preamble of claim 1.

### [Problems to be Solved by the Invention]

With the aforementioned multiple-disc clutch of the related art, a resilient member of high rigidity is required for high-load transmission and effectiveness with respect to shock absorption is reduced. Further, if some kind of stopper is provided at the inner diameter side and driving then takes place, the radius of the contact locations becomes small and the allowable force that can be withstood becomes small.

### [Means And Effects Of Solving The Problems]

In order to resolve the aforementioned problems of the related art, there is provided a multiple-disc clutch comprising a clutch outer, coupled using an input shaft and gears so as to rotate, and being fitted in such a manner that a plurality of friction plates are capable of sliding in an axial direction at an inner surface of a cylindrical part, a clutch inner spline-fitted to a driven shaft and fitted in a slideable manner in the axial direction so that a plurality of clutch discs provided on the outer surface of a cylindrical part alternately overlap with the friction plates and means for closely pressing the friction plates and the clutch discs together, the clutch inner comprising a center boss, a clutch center, and resilient shock-absorbing members, the center boss being equipped with a tubular part spline-fitted to the driven shaft, projections having radial-shaped notches formed in a thick-walled disc shape at an end of the tubular part, and plate-shaped projections formed at the center part of the tubular part, extending radially along a plane passing through an axial line at the center of the notches, the clutch center having a cylindrical part fitted with the clutch discs on the outside part thereof, and being equipped with stopper parts with a central part fitted so as to be capable of slight relative rocking about the axial line at the other end of the tubular part of the center boss and extending to within the notches of the center boss, with the resilient shock-absorbing members being arranged between the plate-shaped projections of the center boss and the stoppers of the clutch center.

As a result of having the above configuration, the present invention is capable of using a resilient shock member with a large capacity and can possess a stopper function between a center boss notch at a position with a large radius and a clutch center stopper.

### Embodiments

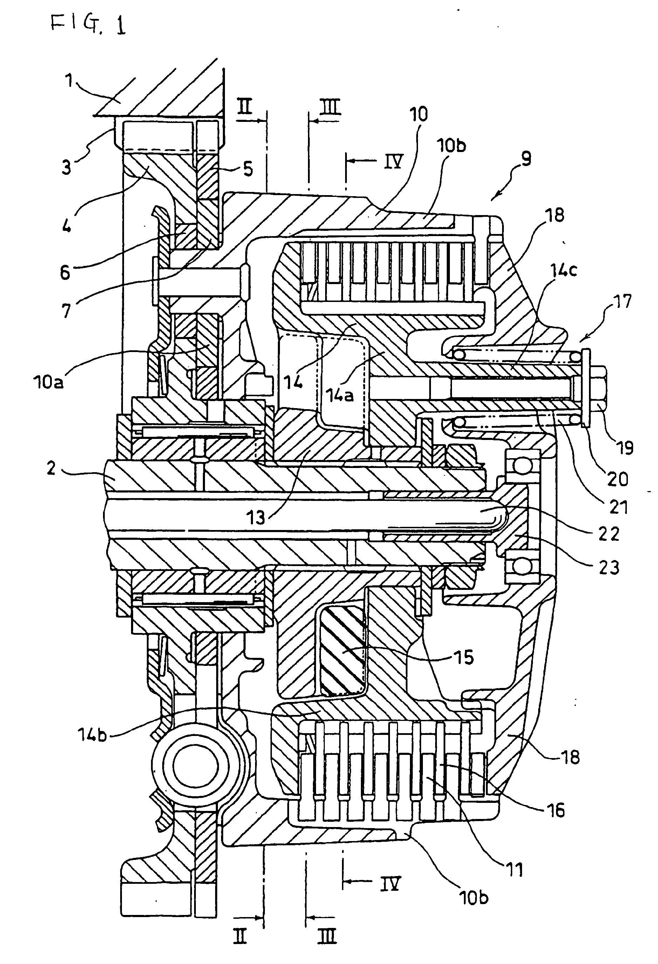

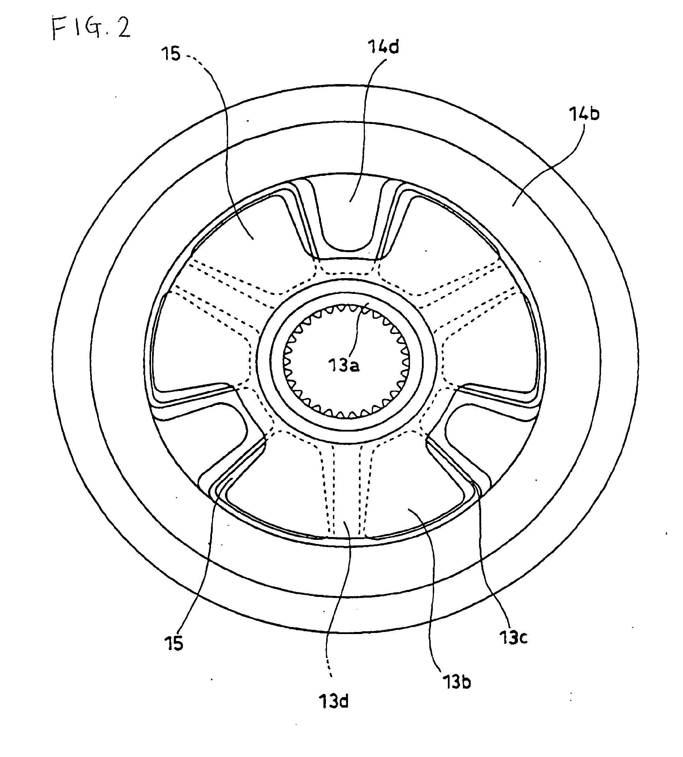

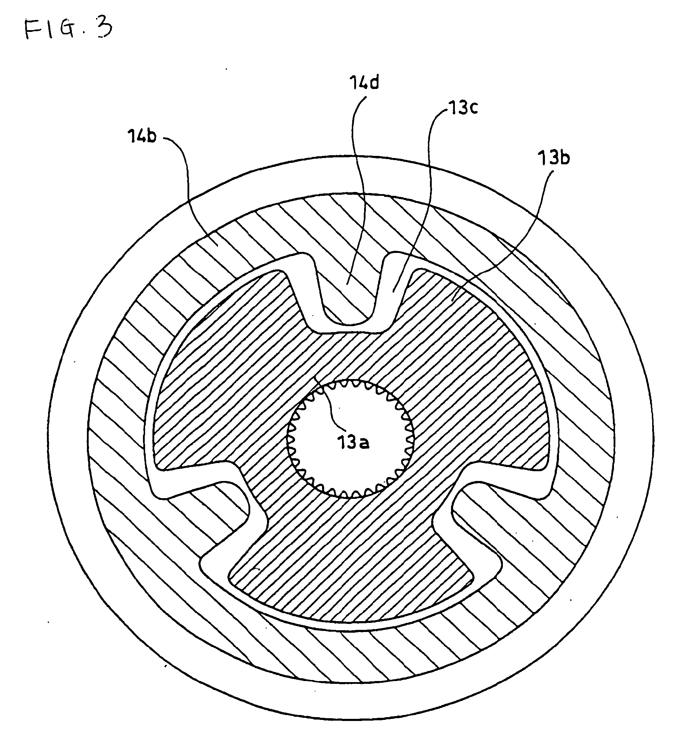

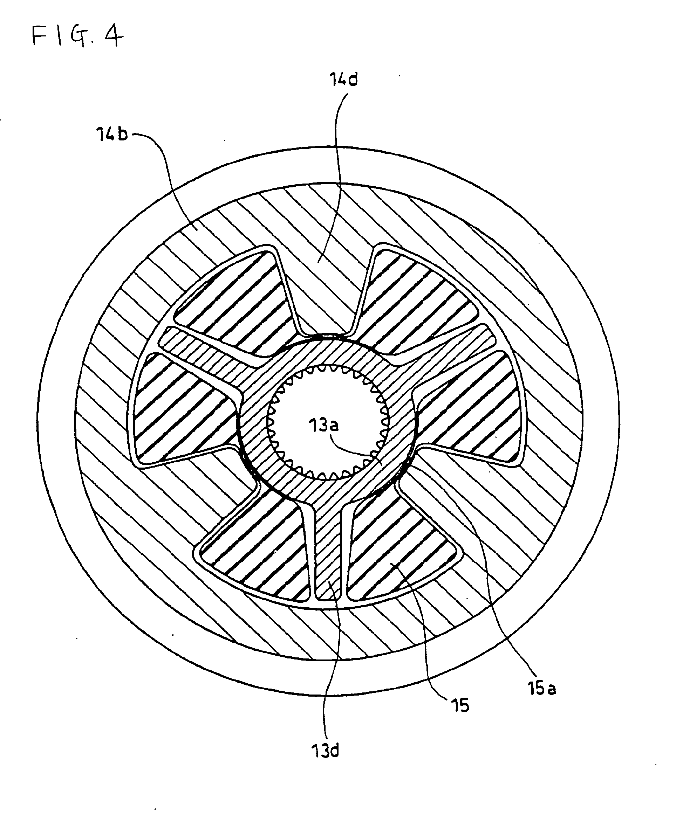

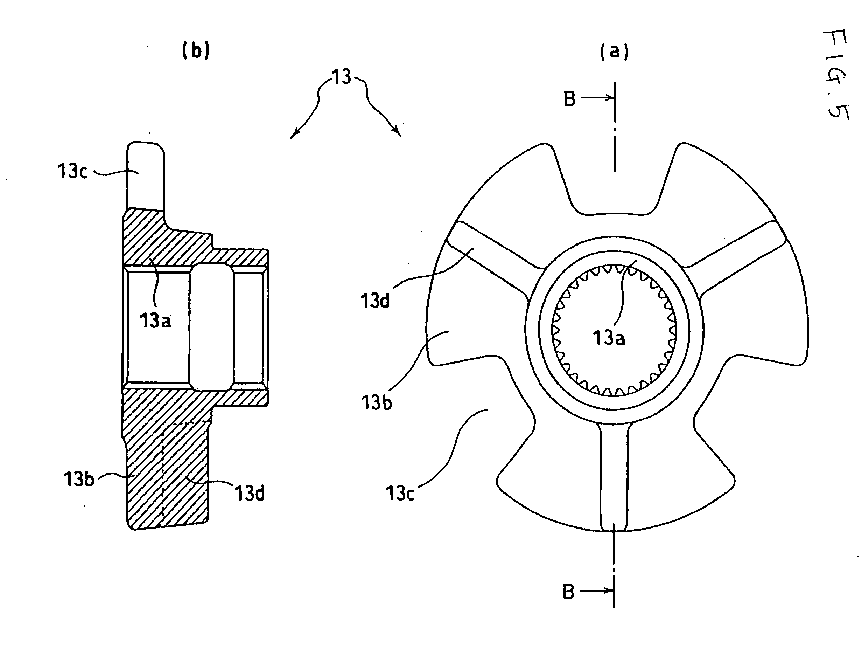

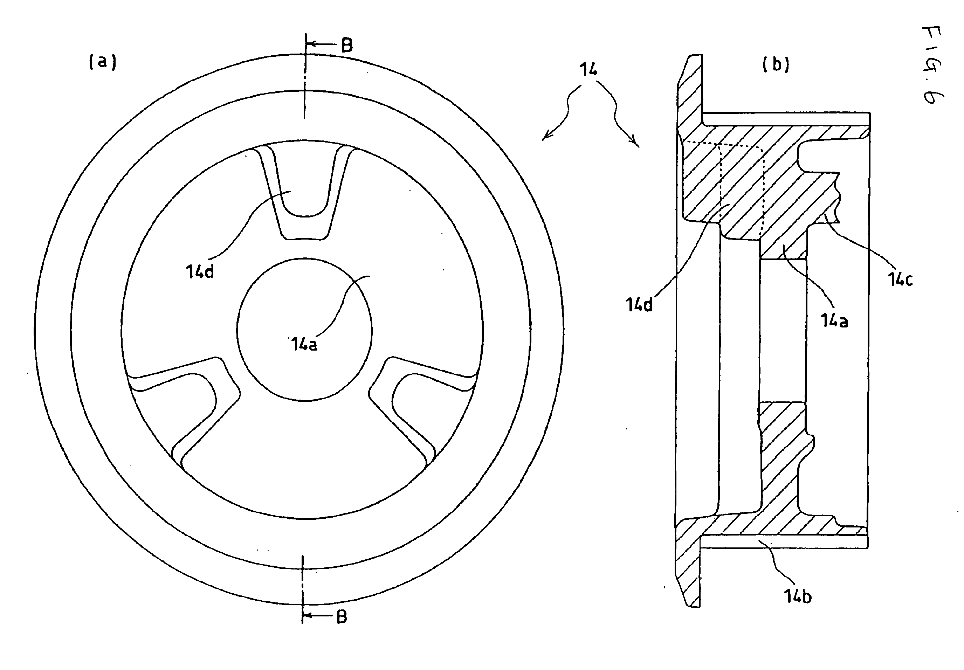

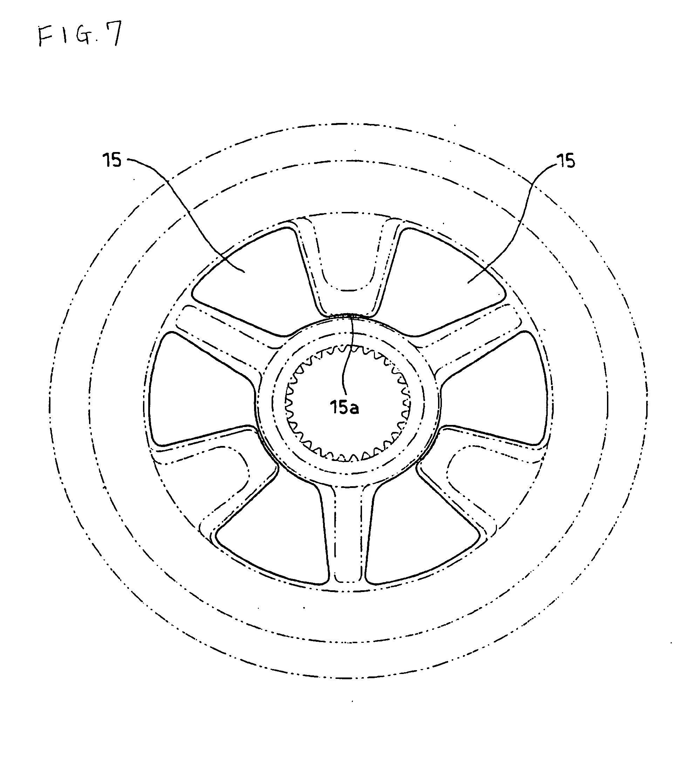

The following is a description of an embodiment of the present invention based on the drawings. FIG. 1 is a vertical cross-section showing the essential parts of a power unit for a motorcycle by cutting away at a plane passing through a crank shaft 1 and a main shaft 2, FIG. 2 is view taken along II-II of FIG. 1, FIG. 3 is a lateral cross-section taken along III-III of FIG. 1, and FIG. 4 is a lateral cross-section taken along IV-IV of FIG. 1. FIG. 5 is a view showing a center boss of a clutch inner of FIG. 1 extracted, where FIG. 5(a) is a side view and FIG. 5(b) is a vertical cross-section taken along B-B of FIG. 5(a), FIG. 6 is a view showing the clutch center of the clutch inner extracted, where FIG. 6(a) is a side view and FIG. 6(b) is a vertical cross-section taken along B-B of FIG. 6(a), and FIG. 7 is a side view showing resilient shock-absorbing material of the clutch inner extracted.

First, in FIG. 1, a primary drive gear 3 is formed at a crank shaft 1 taken as an input shaft, and a primary driven gear 4 normally meshing with the primary drive gear 3 is fitted to the main shaft 2 taken as a driven shaft so as to be relatively rotatable in a circumferential direction with respect to the shaft. A gear 5 is arranged next to the primary driven gear 4.

A multiple-disc clutch 9 comprised of a clutch outer 10, a clutch inner 12 and an operating mechanism 17 is provided at an end of the main shaft 2. A disc part 10a and cylindrical part 10b are formed at the clutch outer 10, with the disc part 10a being fitted to the primary driven gear 4, the gear 5 via a resilient shock-absorbing member 6 and resilient shock-absorbing member 7. Further, a plurality of friction plates 11 are fitted at the inner surface of the cylindrical part 10b so as to be capable of sliding in an axial direction.

On the other hand, the clutch inner 12 of this embodiment comprises a center boss 13, clutch center 14, and resilient shock-absorbing members 15. Although this structure is described in detail later, the center boss 13 and the clutch center 14 engage with each other in such a manner that relative swinging about the shaft axis can be made slight. The center boss 13 is spline-fitted to the main shaft 2 and a cylindrical part 14b is formed at the outer part of the clutch center 14. A plurality of clutch discs 16 are fitted at the outer surface of the cylindrical part 14b so as to alternately overlap with the friction plates 11 and be capable of sliding in the axial direction.

A description will now be given of the configuration of the operating mechanism 17 and the operation of the multiple-disc clutch 9. A thrusting plate 18 is provided on the outside of the friction plates 11 and the clutch discs 16. The thrusting plate 18 presses the plurality of friction plates 11 and clutch discs 16 closely together due to the spring force of a clutch spring 21 fitted using a bolt 19 and a washer 20 to a spring fitting part 14c projecting outwards from a central part 14a of the clutch center 14 in a direction parallel to an axial line so as to generate frictional force. In doing so, the clutch center 14 of the clutch inner 12 rotates integrally with the clutch outer 10. Namely, the multiple-disc clutch 9 is in a connected state and rotation of the crank shaft 1 is transmitted to the main shaft 2.

In order to disengage the connection state of the multiple-disc clutch 9, an urging rod 22 is inserted into the axial center of the main shaft 2 so that a central member 23 resists the force of the clutch spring 21 so as to move towards the right in the drawing, so that the thrusting plate 18 floats from the friction plates 11. In doing so, the connecting of the clutch outer 10 and the clutch inner 12 is broken. The urging rod 22 may also be operated manually using, for example, a mechanism fitted to the handle of the vehicle.

Next, in FIG. 2 through to FIG. 7, a description is given of the structure of a clutch inner 12. First, as shown in FIG. 5, a tubular part 13a spline-fitted to the main shaft 2 as described previously, a projection 13b having a plurality of notches 13c (three in the example in the drawings) formed in the thick-walled disc shape at the end (the left end in FIG. 5(b)) of the tubular part 13a, and plate-shaped projections 13d extending radially along a plane passing through an axial line at the center of the notches 13c formed at a central part of the tubular part 13a are provided at the center boss 13.

Next, as shown in FIG. 6, the clutch center 14 is equipped with the central part 14a fitting to the end part (left end in FIG. 5(b)) of the tubular part 13a of the center. boss 13 and stoppers 14d extending to within the notch 13c of the center boss 13 (refer to FIG. 2 to FIG. 4). The reason why the cylindrical part 14b to which the clutch discs 16 are fitted is on the outside and the reason the spring fitting part 14c to which the bolt 19, washer 20, and clutch spring 21 are fitted projects from the end part is as described below.

The resilient shock-absorbing members 15 are made from a resilient material such as rubber, and as shown by the solid lines in FIG. 7, groups of two are mutually connected by fine fibrous coupling members 15a of the same resilient material.

The center boss 13, clutch center 14 and resilient shock-absorbing member 15 are assembled and connected as shown in FIG. 1 to FIG. 4 so as to form the clutch inner 12. Namely, the central part 14a of the clutch center 14 engages with the end of the tubular part 13a of the center boss 13. In doing so, the stoppers 14d of the clutch center14 advance to between the plate-shaped projections 13d at the notches 13c formed in the projections 13b of the center boss 13. Further, a blank space between the plate-shaped projections 13d of the center boss 13 and the stoppers 14d is filled with the resilient shock-absorbing member 15. Neighboring projections 13b beyond the stoppers 14d are coupled to each other with coupling members 15a.

A slight gap is provided at this time between the inner surfaces of the notches 13c of the projections 13b and the outer surfaces of the stoppers 14d of the clutch center 14. The center boss 13 and the clutch center 14 are therefore allowed to rock slightly with respect to each other about the shaft due to compression of the resilient shock-absorbing member 15. The shock-absorbing load with respect to the clutch inner 12 is first received by the resilient shock-absorbing member 15, but when the load is greater than the capacity of the resilient shock-absorbing member 15, force is transmitted as a result of contact between the inner surfaces of the notches 13c of the projections 13b.

In this embodiment, a large capacity resilient shock-absorbing member 15 is provided between the center boss 13 of the clutch inner 12 and the clutch center 14. Therefore, even if the clutch inner 12 is subjected to a substantial shock, the force of such a shock can be effectively absorbed. Further, by utilizing contact between notches 13c of projections 13b provided on a center boss 13 and stoppers 14d provided on a clutch center 14 as a stopper for stopping relative rocking motion of the center boss 13 and the clutch center 14 within a predetermined limitation, the radius of contact locations and the contact surface area can be made large and the force exerted on the stoppers can be made small so as to further improve the effectiveness of shock absorption.

### [Brief Description of the Numerals]

FIG. 1 is a vertical cross-section showing the essential parts of an internal combustion engine for a motorcycle cut away in a plane passing through the crank shaft 1 and the main shaft 2.
FIG. 2 is a view taken along II-II of FIG. 1.
FIG. 3 is a lateral cross-section taken along III-III of FIG. 1.
FIG. 4 is a lateral cross-section taken along IV-IV of FIG. 1.
FIG. 5 is a view showing a center boss of a clutch inner of FIG. 1 extracted, where FIG. 5(a) is a side view and FIG. 5(b) is a vertical cross-section taken along B-B of F.
FIG. 6 is a view showing the clutch center of the clutch inner extracted, where FIG. 6(a) is a side view and FIG. 6(b) is a vertical cross-section taken along B-B of FIG. 6(a). FIG. 7 is a side view showing resilient shock-absorbing material of the clutch inner extracted.

### [Description of the Numerals]

crank shaft 1, main shaft 2, primary drive gear 3, primary driven gear 4, gear 5, resilient shock-absorbing member 6, 7, multiple-disc clutch 9, clutch outer 10, disc part 10a, cylindrical part 10b, friction plates 11, clutch inner 12, center boss 13, tubular part 13a, projections 13b, notches 13c, plate-shaped projections 13d, clutch center 14, central part 14a, cylindrical part 14b, spring fitting part 14c, stoppers 14d, resilient shock-absorbing member 15, coupling members 15a, clutch discs 16, operating mechanism 17, thrusting plate 18, bolt 19, washer 20, clutch spring 21, urging rod 22, central member 23.

## Claims

1. A multiple-disc clutch comprising a clutch outer (10), coupled using an input shaft (1) and gears (4,5) so as to rotate, and being fitted in such a manner that a plurality of friction plates (11) are capable of sliding in an axial direction at an inner surface of a cylindrical part (10b); a clutch inner (12) spline-fitted to a driven shaft (2) and fitted in a slideable manner in the axial direction so that a plurality of clutch discs (16) provided on the outer surface of a cylindrical part (14) alternately overlap with the friction plates (11), and means (17) for closely pressing the friction plates and the clutch discs together, the clutch inner (12) comprising a center boss (13), a clutch center (14), and resilient shock-absorbing members (15), **characterized by**:
the center boss (13) being equipped with a tubular part (13a) spline-fitted to the drives shaft (2), projections (13b) having radial-shaped notches (13c) formed in a thick-walled disc shape at an end of the tubular part, and plate-shaped projections (13d) formed at a central part of the tubular part (13a) and extending radially along a plane passing through an axial line at the center of the notches (13c), the clutch center (14) having a cylindrical part (14b) fitted with the clutch discs (16) on the outside part thereof, and being equipped with stopper parts (14d) with a central part fitted so as to be capable of slight relative rocking about the axial line at the other end of the tubular part of the center boss and extending to within the notches (13c) of the center boss (13), with the resilient shock-absorbing members (15) being arranged between the plate-shaped projections (13d) of the center boss (13) and the stoppers (14d) of the clutch center (14).

## Patentansprüche

1. Lamellenkupplung, die aufweist: ein Kupplungsäußeres (10), das unter Verwendung einer Eingangswelle (1) und Verzahnungen (4, 5) gekoppelt ist, um sich zu drehen, und in einer derartigen Weise montiert ist, dass mehrere Reibscheiben (11) fähig sind, in einer Axialrichtung an einer Innenoberfläche eines zylindrischen Teils (10b) zu gleiten, ein Kupplungsinneres (12), das mit einer angetriebenen Welle (2) keilnutverbunden ist und in einer in der Axialrichtung verschiebbaren Weise montiert ist, so dass mehrere Kupplungsscheiben (16), die auf der Außenoberfläche eines zylindrischen Teils (49 bereitgestellt sind, abwechselnd mit den Reibscheiben überlappen, und Einrichtungen (17) zum dichten Zusammenpressen der Reibscheiben (11) und der Kupplungsscheiben, wobei das Kupplungsinnere (12) eine Mittelnabe (13), eine Kupplungsmitte (14) und elastische Stoßdämpfungseinrichtungen (15) aufweist, **dadurch gekennzeichnet, dass**:
die Mittelnabe (13) ausgestattet ist mit einem rohrförmigen Teil (13a), der mit der angetriebenen Welle (2) keilnutverbunden ist, Vorsprüngen (13b) mit radial geformten Kerben (13c), die in einer dickwandigen Scheibenform an einem Ende des rohrförmigen Teils ausgebildet sind, und plattenförmigen Vorsprüngen (13d), die an einem Mittelteil des rohrförmigen Teils (13a) ausgebildet sind und sich radial entlang einer Ebene erstrecken, die durch eine Axiallinie in der Mittel der Kerben (13c) geht, wobei die Kupplungsmitte (14) einen zylindrischen Teil (14b) hat, der mit den Kupplungsscheiben (16) auf deren Außenseitenteil montiert ist und mit Anschlagteilen (14a) ausgestattet ist, wobei ein Mittelteil derart eingepasst ist, dass er zu einem leichten relativen Schaukeln um die Axiallinie an dem anderen Ende des rohrförmigen Teils der Mittelnabe fähig ist und sich bis innerhalb der Kerben (13c) der Mittelnabe (13) erstreckt, wobei die elastischen Stoßdämpfungselemente (15) zwischen den plattenförmigen Vorsprüngen (13d) der Mittelnabe (13) und den Anschlägen (14d) der Kupplungsmitte (14) angeordnet sind.

## Revendications

1. Embrayage multidisque comprenant un extérieur d'embrayage (10), couplé à un arbre d'entrée (1) et des engrenages (4, 5) de façon à entrer en rotation ; et étant ajusté de telle manière qu'une pluralité de plaques de friction (11) sont capables de glisser dans une direction axiale au niveau d'une surface interne d'une partie cylindrique (10b) ; et un intérieur d'engrenage (12) ajusté par cannelures sur un arbre mené (2) et ajusté de manière glissante dans la direction axiale de sorte qu'une pluralité de disques d'embrayage (16) disposés sur la surface externe d'une partie cylindrique (14) se chevauchent en alternance avec les plaques de friction (11), et un moyen (17) pour presser étroitement les plaques de friction et les disques d'embrayage ensemble, l'intérieur d'embrayage (12) comprenant un bossage central (13), un centre d'embrayage (14), et des organes résilients absorbant les chocs (15), **caractérisé en ce que** :
le bossage central (13) est équipé d'une partie tubulaire (13a) ajustée par cannelures sur l'arbre mené (2), des saillies (13b) comportant des encoches de forme radiale (13c) formées en une forme de disque à paroi épaisse à une extrémité de la partie tubulaire, et des saillies en forme de plaque (13d) formées au niveau d'une partie centrale de la partie tubulaire (13a) et s'étendant radialement le long d'un plan passant par une droite axiale au centre des encoches (13c), le centre d'embrayage (14) comportant une partie cylindrique (14b) ajustée avec les disques d'embrayage (16) sur sa partie extérieure, et étant équipé de parties de butoir (14d) avec une partie centrale ajustée de façon à être capable de basculement relatif léger autour de la droite axiale à l'autre extrémité de la partie tubulaire du bossage central et s'étendant jusqu'à l'intérieur des encoches (13c) du bossage central (13), les organes résilients absorbant les chocs (15) étant agencés entre les saillies en forme de plaque (13d) du bossage central (13) et les butoirs (14d) du centre d'embrayage (14).
